# EUROPEAN PATENT APPLICATION

(11) **EP 3 242 364 A1**
(43) Date of publication of application: **08.11.2017**
(21) Application number: 16000987.4
(22) Date of filing: 02.05.2016
(51) Int. Cl.: H02G 3/16, H02G 3/12

(54) **A SYSTEM AND METHOD FOR WALL MOUNTING OF ELECTRICAL SWITCHES AND SOCKETS**

(71) Applicant: Feller AG, 8810 Horgen (CH)
(72) Inventor: Kulshrestha, Mayank, CH-8810 Horgen (CH); Roten, Andreas, CH-8614 Bertschikon (CH); Schönenberger, Marco, CH-8810 Horgen (CH); Wälti, Philippe, CH-5077 Elfingen (CH)
(74) Representative: Schalch, Rainer

(57) **Abstract**

A system for wall mounting of wired devices (9) such as electrical switches and sockets is shown which comprises a fixing plate (1) adapted to be mounted on the wall of a building overlaying a wall. The fixing plate has at least one opening (2) adapted to receive a wired device, and preferably has several such openings (2). A fixing flange (5) mountable to a wired device or being part of a wired device is provided and is adapted to be placed from the front side (11) of the fixing plate (1) over and/or within said at least one opening (2). Fixing means (4, 6) are provided for fixing said fixing flange (5) to said fixing plate (1). This system allows for a swifter and easier wiring and mounting of wired devices.

## Description

### Technical Field

The invention relates to a system for wall mounting of wired devices such as electrical switches and sockets. The invention further relates to a method of mounting wired devices such as electrical switches and sockets.

### Background Art

Different systems are known to mount electrical mains wall switches and sockets in a recess within a wall. In conventional systems a combination of wired devices is first mounted on a fixing plate and the devices are then wired to the electrical cables that can be accessed in a wall box within the recess. While being practicable for mounting one or two wired devices in this way it shows that mounting more wired devices at the same time in this way, for example four devices in a two by two arrangement or even nine devices in a three by three arrangement, using this known system is becoming quite difficult as the many wired devices fixed on the fixing plate have to be connected to the cables while the electrician holds the fixing plate near to the wall box. The fully wired fixing plate is then mounted on the wall and the wired devices are thus placed within the wall recess or wall box, respectively. When a wrong connection has been made during wiring, the electrician has to remove the complete fixing plate to access the defective connection. Such a system is, however, very well suited for different kind of buildings if it includes an individual cover for each wired device and a common cover frame.

The mentioned problem is not present in a known system using several one by one fixing plates which are attached together to provide a combination of wired devices. But in such a system a gap appears between adjacent wired devices due to the borders of the one by one fixing plates and this non-usable space is visible in the area between the cover plates of such a system. Moreover, a great number of fixing screws are necessary since each fixing plate has to be individually fixed on the wall box of this system. A further known system uses a fixing plate and a one-piece or monobloc arrangement, respectively, of a wired device and a cover plate which limits the functionality and the design of the system in comparison to the first mentioned system with separate cover plates and a separate common cover frame.

In general, in the prior art systems the position of the wired device insert which requires 3-point fixing or other fixing distance is dependent on the fixing plate of the system and can't be changed. A fixing plate of the known systems adapted for horizontal mounting does not work for vertical mounting, so the electrician has to order the fixing plate dependent on the orientation of its mounting.

### Disclosure of the Invention

The problem to be solved by the present invention is to provide an improved system for mounting electrical wired devices. The system shall be suitable for using individual, separate cover plates for each wired device and for using a common cover frame and yet it shall overcome the mentioned drawbacks, in particular when installing several wired devices in a recess in a wall.

This problem is solved by a system with the features of claim 1.

The invention thus allows to install the fixing plate directly on the wall over an in-wall box within a wall recess or over an on-wall box, respectively, without first installing the wired devices on the fixing plate. The wired devices can then be individually connected to the electrical cables and then mounted to the fixing plate by means of their fixing flange and the fixing means. As each wired device is mounted from front, it allows the electrician to easily access the connections of the individual device using both hands for this work. Thus the invention provides for a fast mounting of wired devices such as electrical switches and electrical sockets. After all wired devices have been mounted the cover plates of the individual wired devices can be mounted in a known manner as well as the common frame plate to all devices. Thus the system provides for a large selection of wired devices and their cover plates and frames as in conventional systems while allowing the easy and swift installation. As well a fast access to the wired devices is provided in case of repair and replacement. A universal fixing plate thus provides a common opening where any wired device can be mounted.

In a preferred embodiment of the system the fixing plate is constructed as being rotationally symmetrical with regard to a vertical axis through the center of the fixing plate. This allows to position the fixing plate in 90° rotational positions on the wall and thus providing for horizontal and vertical orientation of the same fixing plate. This avoids the need for separate fixing plate parts.

The fixing plate is adapted to be mounted on an in-wall box or on an on-wall box and the system may include either of such boxes and the fixing plate may be pre-mounted on such a box or may even be an integral part of such a box.

A preferred embodiment of the system uses fixing means which include corresponding through holes in the fixing plate and the fixing flange and separate fixing means that engage on both the fixing plate and the fixing flange. Such fixing means can be provided as so called quarter-turn screws and can be provided in particular as twist-lock bolts with two catches, or with more catches, adapted for engaging the fixing plate and a head for engaging the fixing flange and wherein the head is a countersunk head with a tool engagement recess. This allows to fix the flange and thus the wired device to the fixing plate by a simple quarter turn rotation of the bolt with a screwdriver or another tool adapted to the tool engagement recess of the head. In an alternative embodiment of the system the fixing means include corresponding snap-lock means provided on the fixing plate and on the fixing flange. This allows for a tool-less mounting and fixing of the wired device with the fixing flange on the fixing plate. In an embodiment of such snap-lock fixing means the fixing plate is provided with a flexible snap-lock member and the fixing flange is provided with a rigid snap-lock member. In another embodiment the fixing plate is provided with a rigid snap-lock member and the fixing flange is provided with a flexible snap-lock member. Both embodiments provide for a fast mounting of the wired devices by the electrician.

In another preferred embodiment the fixing plate includes a circumferential recess on its reverse side provided for facing the wall. This allows for a flush mounting on the wall if an in-wall box placed in the wall recess includes a flange on the wall as is often the case with wall boxes for hollow wall constructions or may be the case with other wall boxes as well.

Fixing plates of the system may be provided which have a different offset for the accommodation of fixing flanges to allow for variable height mounting of the wired devices by using fixing plates with such different offset.

The fixing plates may as well be provided to offer different mounting positions for the fixing flanges.

The fixing plate can be made of metal or the fixing plate can made of a plastic material. The fixing plate can as well be made of a composite material and can as well be made of wood. As well the fixing flange can be made of metal or can be made of a plastic material or can be made of a composite material or can be made of wood. Preferably the fixing flange is a factory pre-mounted element of a wired device. In another embodiment the fixing flange can be a separate element which is installed later on the wired device when the system is used by the electrician. The fixing flange may be constructed as being essentially rotationally symmetrical with regard to a vertical axis through the center of the fixing flange. In that case the fixing flange allows to be placed and mounted to the fixing plate in any of 90 degrees rotational positions.

In a further preferred embodiment of the system different fixing flanges are provided having mounting sections for the wired device which are differently recessed compared to the fixing sections of the fixing flange adapted to be fixed to the fixing plate. This allows to position the wired device in different heights in relation to the fixing plate or the wall, respectively, by using different fixing flanges.

Preferably the system comprises wired devices for mains voltage, such as switches and sockets it may as well comprise wired devices including electronic circuits and/or it may comprise wired devices adapted to provide network connections. It is further preferred that the system comprises several wired devices and an individual cover plate for each wired device and a common frame plate for the several wired devices.

While the system is particularly useful for two by two or three by three configurations or even configurations with even more mounting spaces for wired devices, it is to be understood that it is as well useful for smaller configurations such as one by one, two by one, three by one and other configurations of wired devices.

The invention shall further provide an improved method for installing electrical wired devices.

This goal is met by a method according to the independent method claim.

### Brief Description of the Drawings

The invention will be better understood and objects other than those set forth above will become apparent when consideration is given to the following detailed description thereof. This description makes reference to the annexed drawings, wherein:
Figure 1 shows a fixing plate as seen from its front side facing away from a wall of a building as an example of a first embodiment of the invention;
Figure 2 shows the fixing plate of Figure 1 from its reverse side which will face the wall of a building when mounted to the wall;
Figure 3 shows a fixing flange for the first embodiment of the invention;
Figure 4 shows the fixing flange of Figure 3 attached to a wired device which is a combination of mains switches and a mains socket;
Figure 5 shows the fixing plate of Figure 1 with fixing flanges mounted and secured to the fixing plate above each opening of the fixing plate but without showing the wired devices on which the fixing flanges are mounted in order to simplify the drawing;
Figure 6 shows a view of an alternative fixing flange for the first embodiment;
Figure 7 shows a view of yet another alternative fixing flange for the first embodiment;
Figure 8 shows a fixing plate as seen from its front side facing away from a wall of a building as an example of a second embodiment of the invention;
Figure 9 shows the fixing plate of Figure 8 from its reverse side which will face the wall of a building when mounted to the wall;
Figure 10 shows a fixing flange of the second embodiment with a wired device;
Figure 11 shows the fixing plate of Figure 8 with fixing flanges according to Figure 10 mounted and secured to the fixing plate above each opening of the fixing plate but again without showing the wired devices on which the fixing flanges are mounted in order to simplify the drawing, and this Figure also illustrates in 3rd row, 2nd column that the fixing flange is symmetric and allows to be rotated and then mounted so that the same fixing flange can be used for horizontal or vertical mounting of wired devices;
Figure 12 shows a view of an alternative fixing flange for the second embodiment;
Figure 13 shows a view of a fixing plate as seen from its front side facing away from a wall of a building of a third embodiment of the invention;
Figure 14 shows the fixing plate of Figure 13 from its reverse side which will face the wall of a building when mounted to the wall;
Figure 15 shows a fixing flange for the third embodiment of the invention without a wired device;
Figure 16 shows the fixing plate of Figure 13 with fixing flanges according to Figure 15 mounted and secured to the fixing plate above each opening of the fixing plate but without showing the wired devices on which the fixing flanges are mounted in order to simplify the drawing;
Figure 17 shows a view of a fixing plate as seen from its front side facing away from a wall of a building of a fourth embodiment of the invention;
Figure 18 shows the fixing plate of Figure 17 from its reverse side which will face the wall of a building;
Figure 19 shows a fixing flange for the fourth embodiment of the invention attached to a wired device which is a combination of mains switches and a mains socket;
Figure 20 shows the fixing plate of Figure 17 with fixing flanges according to Figure 19 mounted and secured to the fixing plate above each opening of the fixing plate but without showing the wired devices on which the fixing flanges are mounted in order to simplify the drawing; and
Figure 21 shows a view of a fixing flange of the first embodiment wherein the flange section on which the wired device is mounted is set backwards in comparison to the fixing flange of Figure 4.

### Modes for Carrying Out the Invention

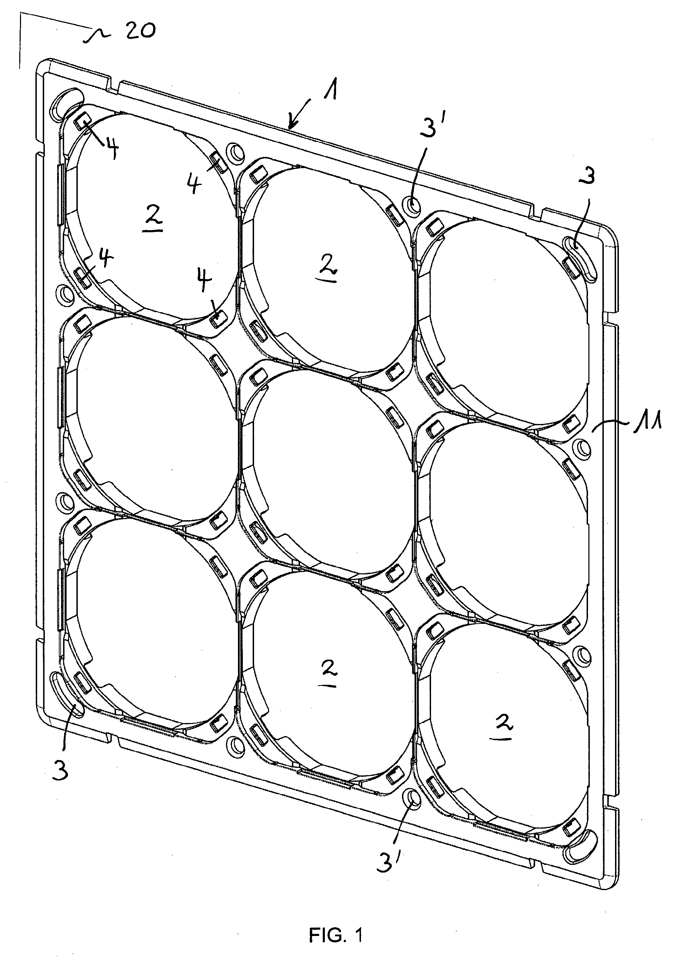

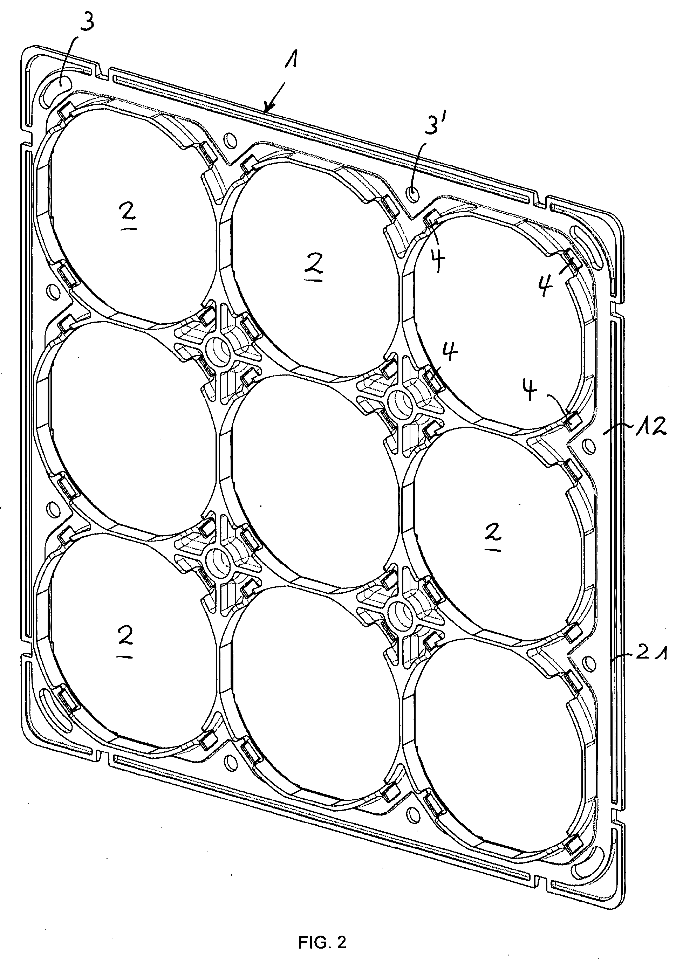

A first embodiment of the invention is now described with reference to Figures 1 to 7. A fixing plate 1 is shown which is adapted to be mounted on a wall (symbolized by a wall part 20 or an in-wall box part 20). The fixing plate covers a recess in the wall, usually provided by a plastic in-wall box arranged within the wall, and the electrical cables to be connected to the wired devices such as electrical switches and electrical sockets, are accessible within the wall box. The fixing plate 1 can as well be mounted to an on-wall box (and in this case the reference numeral 20 would stand for the symbolized on-wall box). For arranging and mounting the wired devices the fixing plate 1 provides in this case nine openings 2 arranged in a three by three arrangement. This is of course to be understood as an example only. Figure 1 shows a view on the front side 11 of the fixing plate and in Figure 2 a view to the reverse side 12 - facing the wall when the fixing plate is mounted - is shown. The fixing plate can be mounted to the wall by screws (not shown) directly to the wall itself or to the in-wall box or to the on-wall box. To this end the fixing plate is provided with through holes 3 and 3'. It is possible as well to provide a fixing plate 1 of the system which is factory pre-mounted to an in-wall box of the system or to an on-wall box of the system. It is as well possible to provide a fixing plate 1 which is an integral part of an in-wall box of the system or an on-wall box of the system. The wall box itself is known to the skilled person and doesn't have to be shown here in detail.

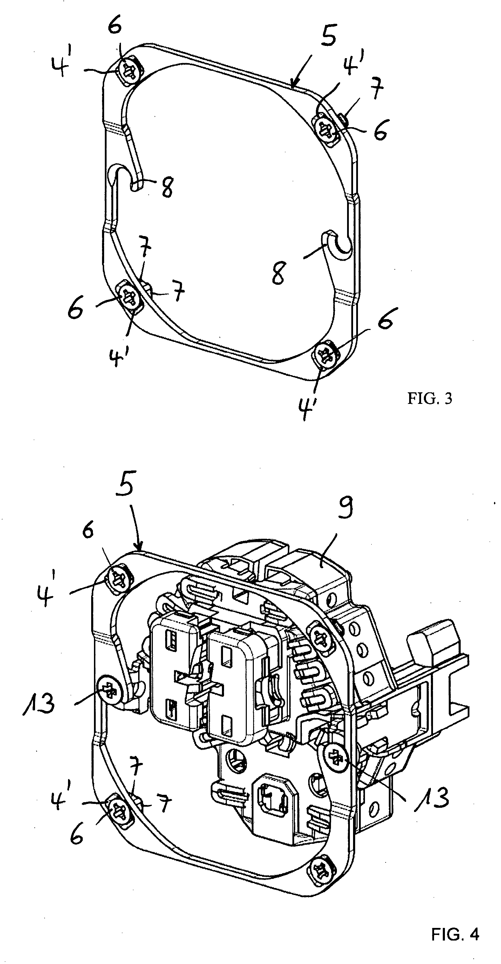

A fixing flange 5 of this embodiment is shown in Figure 3 without a wired device and in Figure 4 with an example of a wired device 9 which is a double mains switch and a socket. The fixing flange 5 is mounted in this example to the wired device by screws 13 which engage with their heads in mounting parts 8 of the fixing flange 5. Preferably the wired device 9 and the fixing flange 5 are factory pre-mounted to each other. Otherwise the electrician will combine the wired device and the fixing flange on-site.

The fixing flange 5 and the fixing plate 1 are constructed such that the fixing flange 5 is mountable on the fixing plate 1 from the front side 11 thereof whereby the wired device 9 enters through the opening 2 into the wall recess or wall box, respectively. This allows, as outlined before, to wire the individual wired devices 9 to the respective cables from the wall box while the fixing plate is already mounted to the wall. When a wired device 9 with its fixing flange 5 has been electrically connected, the fixing flange can be fitted to the front side 11 and can be secured to the fixing plate 1 by fixing means.

In this embodiment, the fixing means are provided by a number of corresponding holes 4 provided in the fixing plate 1 around each opening 2 and holes 4' provided in the fixing flange 5 and by additional fixing elements 6. These fixing elements can be screws that engage with their heads on the fixing flange and with their threads in corresponding threads within the through hole of the fixing plate. In the shown embodiment the fixing elements are so called "quarter-turn screws" which are in this embodiment actually not screws but bolts with two catches or wings, respectively, extending laterally and in opposing direction from the stem of the bolt. Accordingly, the holes 4 and 4' are of rectangular shape allowing the catches to pass when the quarter-turn screws are inserted into the corresponding holes 4 and 4' with the catches oriented in the long direction of the rectangular holes. The heads of the bolts 6 engage on the edge of the holes 4'. After insertion of the fixing elements 6 into the corresponding holes, each of the elements 6 is turned by 90° using a tool that engages the shown tool engagement recess on the head of each bolt 6 thereby engaging the catches of the bolts on the surface of the reverse side 12 of the fixing plate and thus firmly connecting and securing the fixing flange 5 on the fixing plate 1. In Figure 3 in the right upper edge of the fixing flange 5 the bolt 6 has been turned to the locked position just for the sake of explanation, so that one of the catches 7 can be seen in the locked position of the fixing means 6 while in the lower left edge of fixing flange 5 the bolt 6 is in its mounting position such that both catches 7 can enter the corresponding hole 4 on the fixing plate.

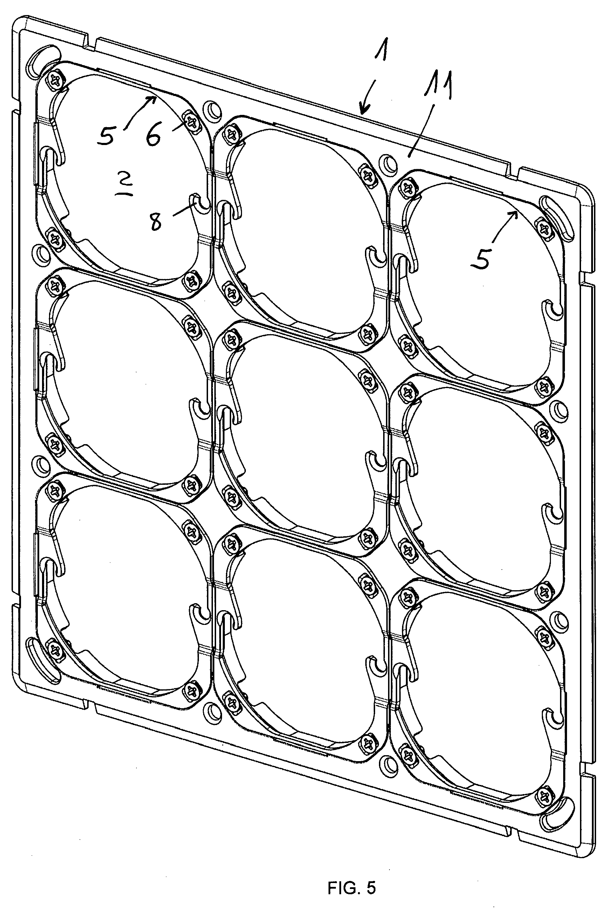

Figure 5 shows the fixing plate 1 with all fixing flanges 5 connected thereto but in order to simplify the drawing without the wired devices 9 that are connected to each of the fixing flanges.

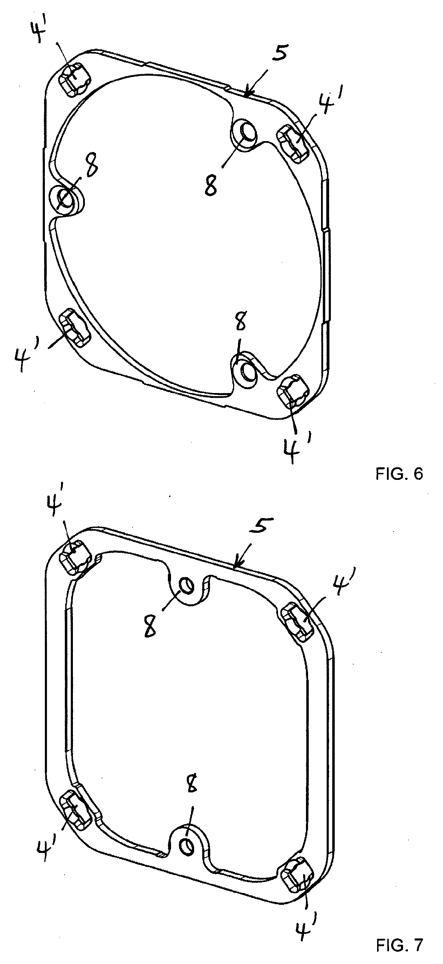

Figures 6 and 7 show different embodiments of the fixing flange 5 which differ only for the mounting parts 8 of the fixing flanges which are adapted to different wired device types.

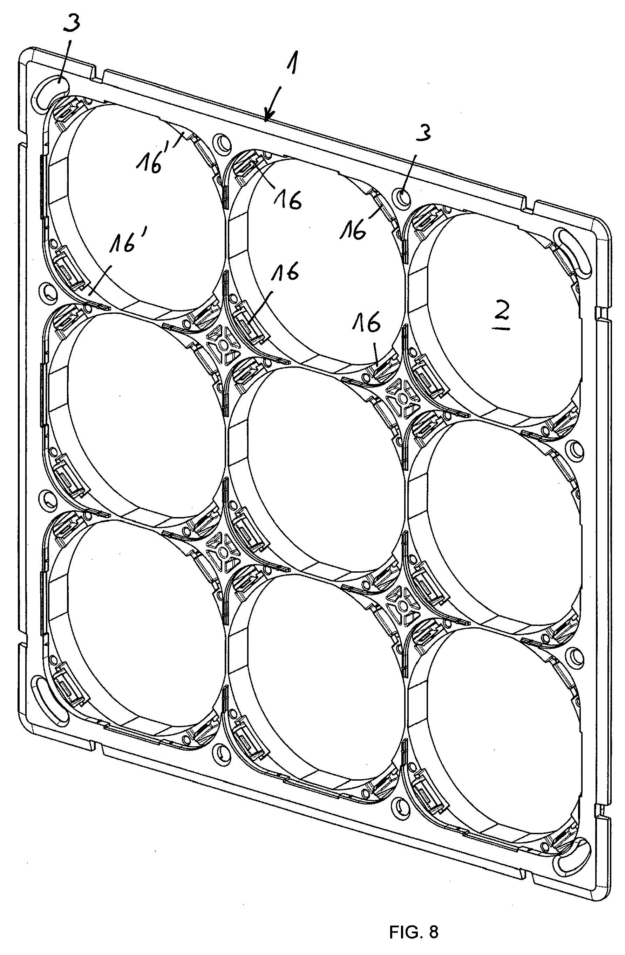

Figures 8 to 12 show another embodiment of the invention wherein the fixing means are different. So called "snap-fit" fixing means are embodied on the fixing plate 1 and on the fixing flange 5. No additional element is used in this case so that the fixing means are provided by parts of the fixing plate 1 and parts of the fixing flange 5 only. Rigid recessed rest planes 14 are provided on the fixing flange 5. Elastically deformable retaining members 16 are provided on the fixing plate 1 having a normal position and being deformable to bend back from this normal position and to spring back to the normal position. The rest planes 14 and the retaining members 16 are arranged such that the retaining members will yield when the fixing flange 5 is pushed onto the fixing plate 1 and the parts of the fixing flange 5 with the rest planes pass the retaining members. These members will spring back into their normal position when the rest plane has reached the final position in which the fixing flange sits on planes 16' of the fixing plate 1 and is secured on the fixing plate in this final position. The retaining members having sprung back to their normal position will then contact and block the rest planes into this position, thus securing the fixing flange 5 to the fixing plate 1.

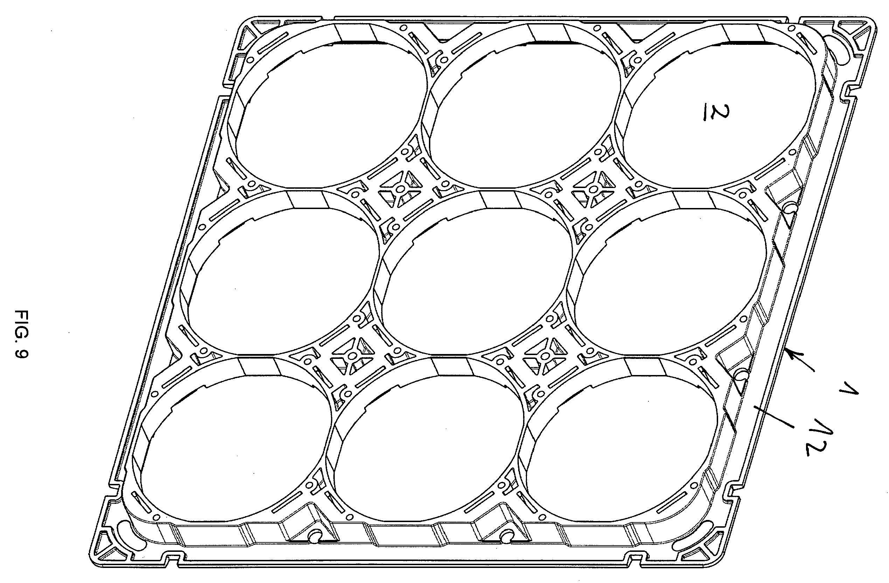

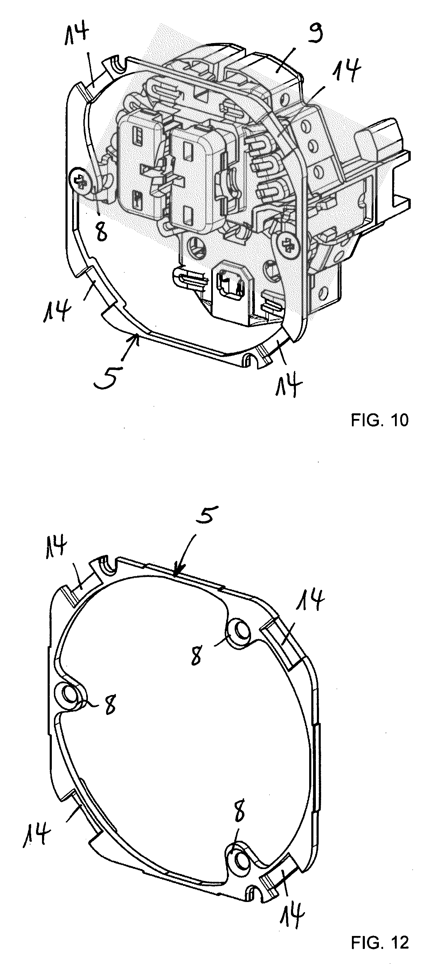

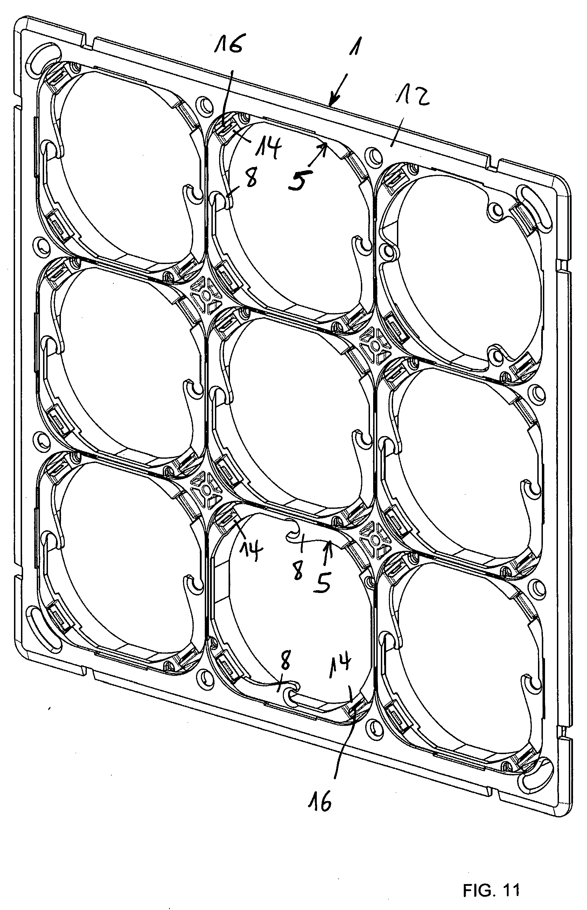

Figure 8 shows the fixing plate 1 from its front side 11 while Figure 9 shows the reverse side 12. Figure 10 shows the fixing flange 5 with a wired device 9 mounted to the fixing flange. Figure 11 shows the fixing plate with all fixing flanges connected to the fixing plate but without showing the wired devices in order to simplify the drawing. Figure 11 also illustrates in 3rd row, 2nd column that the fixing flange 5 is symmetric and allows to be rotated and then mounted and secured to the fixing plate 1 so that the same fixing flange 5 can be used for horizontal or vertical mounting of wired devices. This feature is preferred for the fixing flanges 5 of all embodiments. Figure 12 shows another example of a fixing flange 5 of this embodiment.

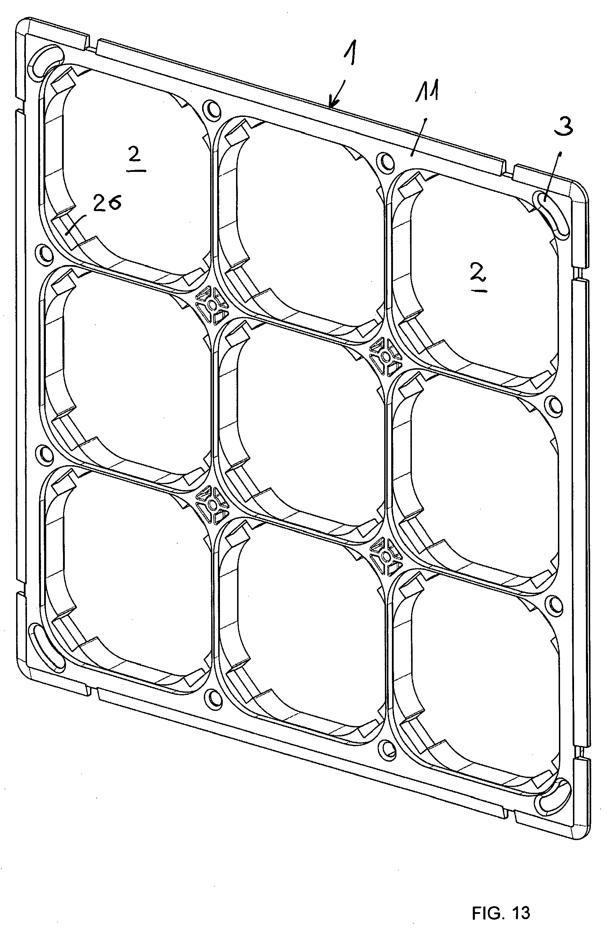

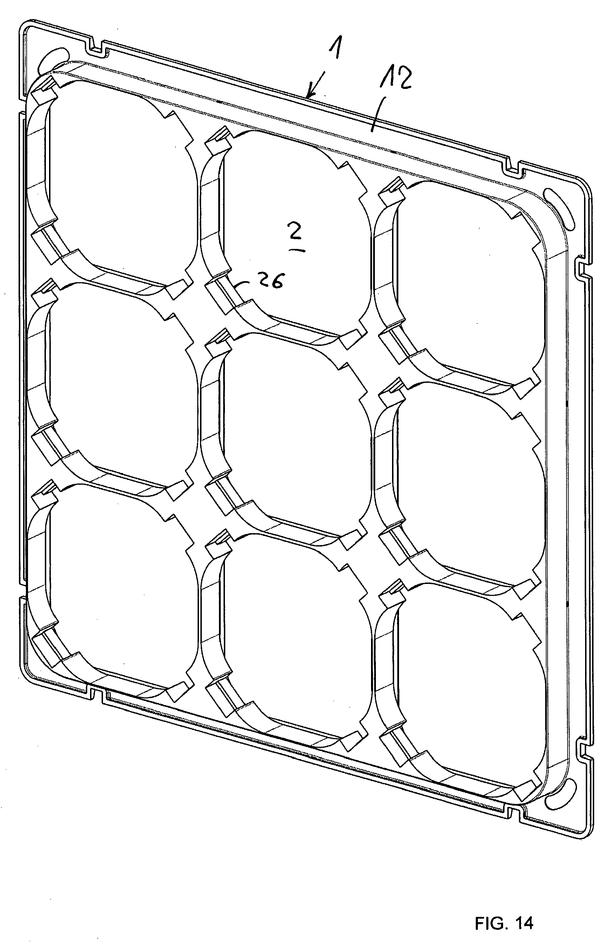

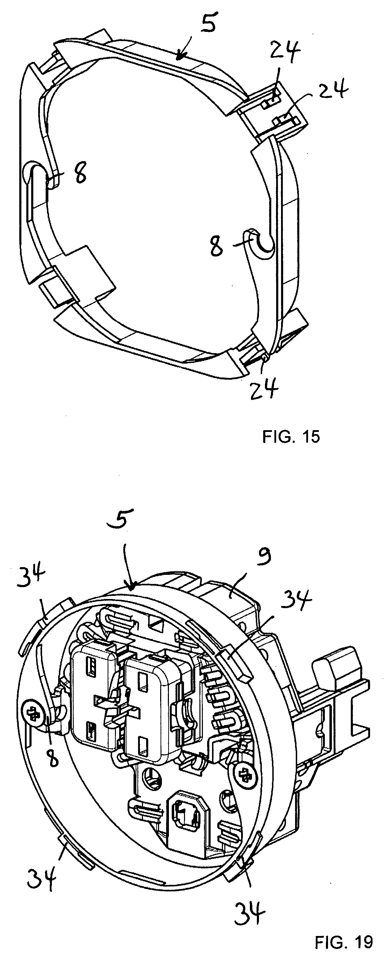

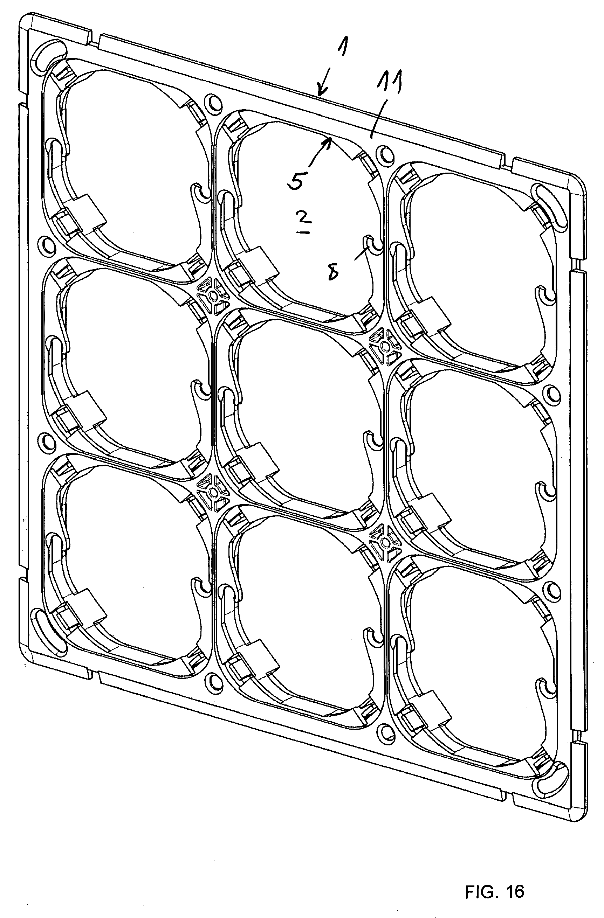

Figures 13 to 16 show another embodiment with a snap-fit connection of the fixing plate 1 and the fixing flange 5. In this embodiment the elastically yielding elements 24 are arranged on the fixing flanges 5 while the rigid members 26 are present on the fixing plate 1. Accordingly, a fixing plate 1 with such members 26 is shown in a front side view in Figure 13 and in a reverse side 12 view in Figure 14. Figure 15 shows the fixing flange 5 with the yielding elements 24, here without the wired device to simplify the drawing. Figure 16 shows a fixing plate 1 with all fixing flanges 5 mounted thereto and fixed by the fixing members 24, 26. Here as well the wired devices are not shown. The function of the elastically yielding elements 24 is again to allow a snap-fit securing of the fixing flange 5 when it has reached its final position on the fixing flange 1 by springing back to their normal position and engaging on the rigid members 26.

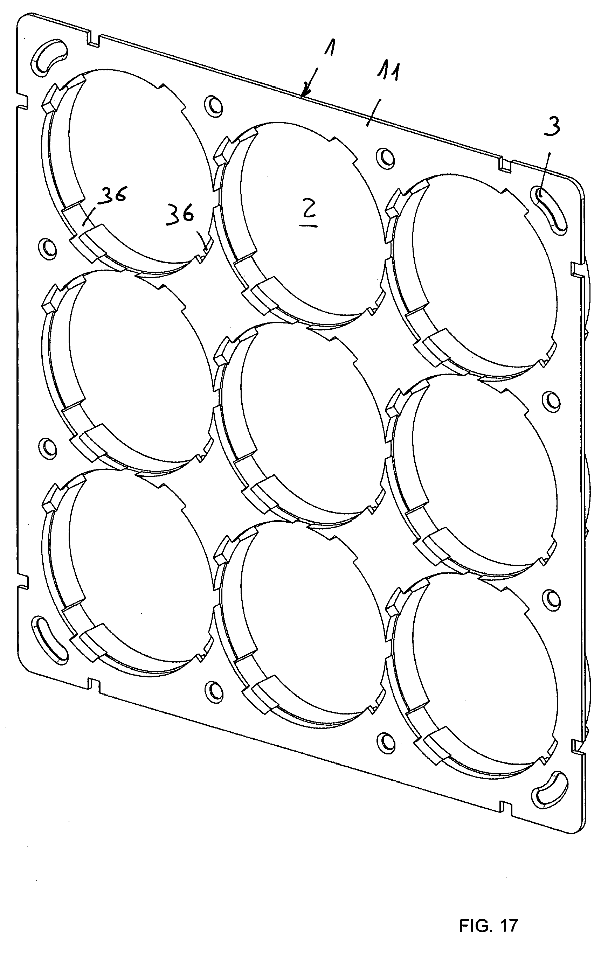

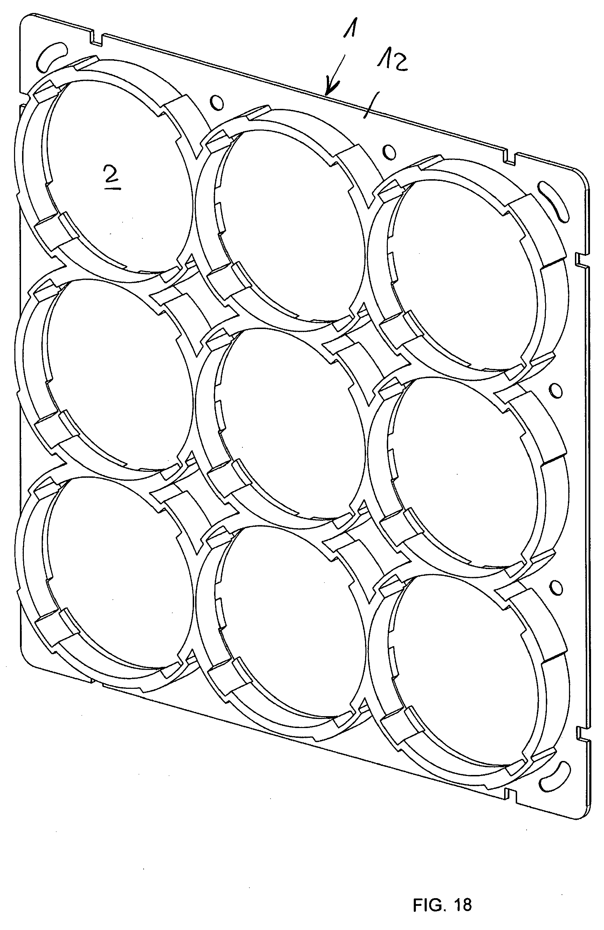

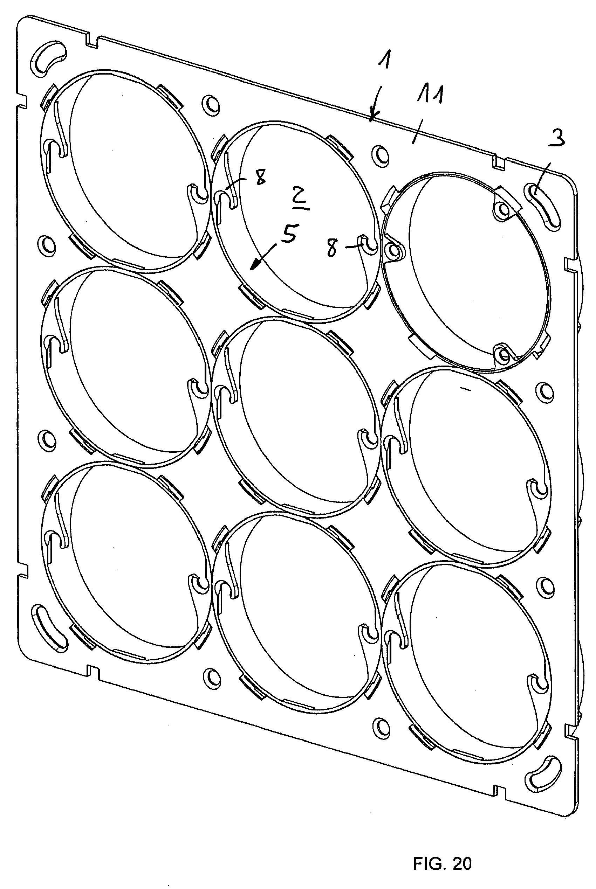

Figures 17 to 20 show yet another embodiment wherein the fixing means 34 on the fixing flange 5 and the fixing means 36 on the fixing plate 1 are shaped to form together a bajonet-mount so that the fixing flange 5 is mounted and fixed or secured, respectively to the fixing plate 1 by an insertion and turning movement. Figures 17 and 18 show the fixing plate in front side view and reverse side view, respectively, while Figure 19 shows the fixing flange 5 connected to a wired device 9. In Figure 20 the fixing plate 1 is shown on which fixing flanges 5 have been mounted and fixed by the bajonet-mount but without showing the wired devices which are present on each fixing flange 5 in order to simplify the drawing.

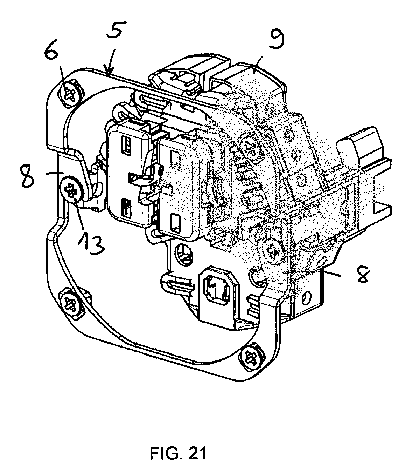

Figure 21 shows a fixing flange 5 wherein the mounting sections 8 for the wired device 9 are provided in a position shifted backwards towards the bottom of the wall box in comparison to the fixing flange shown in Figures 3 and 4. This allows to position the wired device nearer to the bottom of the wall box. A set of fixing flanges 5 with different backward shifted positions of the mounting sections 8 can be provided to allow the most suitable position of a wired device.

On the other hand, the system may provide different fixing plates 1 which provide a different offset for the accommodation of fixing flanges 5 with respect to the front side surface 11 of the fixing plate 1, to allow for variable height mounting of the wired devices by using fixing plates with such different offset.

As shown for example in Figure 2, the fixing plate 1 may preferably include on its reverse side 12 a circumferential border 21 which is raised. This allows to accommodate a flange of a wall box and helps in flush mounting of the fixing plate 1 to a wall.

While there are shown and described presently preferred embodiments of the invention, it is to be distinctly understood that the invention is not limited thereto but may be otherwise variously embodied and practiced within the scope of the following claims.

## Claims

1. A system for wall mounting of wired devices (9) such as electrical switches and sockets, the system comprising
- a fixing plate (1) having a front side (11) and a reverse side (12), said fixing plate having at least one opening (2) adapted to receive a wired device, and in particular having several openings (2) each adapted to receive a wired device,
a fixing flange (5) mountable to a wired device or being part of a wired device, said fixing flange being adapted to be placed from the front side (11) of the fixing plate (1) over and/or within said at least one opening (2); and
fixing means (4,6; 14,16; 24,26; 34,36) provided for fixing said fixing flange (5) to said fixing plate (1).

2. The system of claim 1 wherein the fixing plate (1) is constructed as being rotationally symmetrical with regard to a vertical axis through the center of the fixing plate.

3. The system of claim 1 or 2 wherein the fixing means include corresponding through holes (4, 4') provided in the fixing plate (1) and in the fixing flange (5) and additional fixing elements (6), each adapted to engage on both the fixing plate and the fixing flange.

4. The system of claim 3 wherein the fixing elements (6) are of the quarter-turn screw type and in particular wherein the fixing elements (6) are twist-lock bolts with two opposing catches (7) or more than two catches adapted for engaging the fixing plate and with a head for engaging the fixing flange and wherein the head is a countersunk head with a tool engagement recess.

5. The system of claim 1 or 2 wherein the fixing means include corresponding snap-lock means provided on the fixing plate and on the fixing flange.

6. The system of claim 5 wherein the fixing plate is provided with a flexible snap-lock member and the fixing flange is provided with a rigid snap-lock member.

7. The system of claim 5 wherein the fixing plate is provided with a flexible snap-lock member and the fixing flange is provided with a rigid snap-lock member.

8. The system of any of claims 1 to 7 wherein the fixing plate includes a circumferential recess on its backside provided for facing the wall.

9. The system of any of claims 1 to 8 wherein the fixing plate (1) is made of metal or wherein the fixing plate is made of plastic material, or wherein the fixing plate is made of a composite material or wherein the fixing plate is made of wood.

10. The system of any of claims 1 to 9 wherein different fixing plates of the system provide a different offset for the accommodation of fixing flanges with respect to the front side surface of the fixing plate, to allow for variable height mounting of the wired devices by using fixing plates with such different offset.

11. The system of any of claims 1 to 10, wherein fixing plates are provided which offer different mounting positions for the fixing flanges.

12. The system of any of claims 1 to 11 wherein the fixing plate (1) is adapted to be mounted on an in-wall box or on an on-wall box.

13. The system of any of claims 1 to 12 wherein the system includes an in-wall box or an on-wall box and the fixing plate (1) is a pre-mounted part of said in-wall or said on-wall box, respectively.

14. The system of any claims 1 to 13 wherein the fixing flange (5) is a factory pre-mounted element of the wired device (9).

15. The system of any of claims 1 to 14 wherein the fixing flange (5) is made of metal or wherein the fixing flange (5) is made of plastic material or wherein the fixing flange is made of a composite material.

16. The system of any of claims 1 to 15 wherein the fixing flange is constructed as being essentially rotationally symmetrical with regard to a vertical axis through the center of the fixing flange.

17. The system of any of claims 1 to 16 wherein the system comprises different fixing flanges having mounting sections (8) for the wired device which mounting sections are differently recessed compared to the fixing sections of the fixing flange adapted to be fixed to the fixing plate.

18. The system according to any of claims 1 to 17 comprising wired devices (9) for mains voltage, such as switches and sockets and in particular as well comprising wired devices including electronic circuits and/or comprising wired devices adapted to provide network connections.

19. The system according to any of claims 1 to 18 wherein the fixing plate has several openings (2) and in particular wherein the fixing plate is provide with four openings in a two by two arrangement or wherein the fixing plate is provided with nine openings in a three by three arrangement.

20. The system according to any of claims 1 to 19 wherein several wired devices are provided and the system comprises an individual cover plate for each wired device and a common frame plate for the several wired devices.

21. A method for installing electrically wired devices in a wall recess of a wall of a building into which recess electrical cables are present to be connected to the wired devices, or installing electrically wired devices to an on-wall box, using the system according to any of claims 1 to 20, wherein the fixing plate (1) is mounted on the wall over the wall recess, or wherein the fixing plate is mounted to the on-wall box, the electrical cables are connected outside of said recess or outside said on-wall box to at least one of said wired devices being provided with a fixing flange and fixing said wired device within the recess or to the on-wall box by inserting the wired device into the wall recess and fixing the fixing flange to the fixing plate by the fixing means.

22. The method of claim wherein an in-wall box is provided within the recess of the wall and the fixing plate is mounted to the in-wall box.
